# EUROPEAN PATENT SPECIFICATION

(11) **EP 0 391 237 B1**
(45) Date of publication and mention of the grant of the patent: **21.07.1993**
(21) Application number: 90105949.3
(22) Date of filing: 28.03.1990
(51) Int. Cl.: G01T 1/20, G01T 1/202

(54) **Radiation detector**
Strahlungsdetektor
Détecteur de rayonnement

(30) Priority: 07.04.1989 JP 86793/89
(43) Date of publication of application: 10.10.1990
(73) Proprietor: Shin-Etsu Chemical Co., Ltd., Chiyoda-ku Tokyo 100 (JP)
(72) Inventor: Ryuo, Toshihiko, Usuigun, Gunma 379-02 (JP); Makikawa, Shinji, Annaka-shi, Gunma 379-01 (JP); Mori, Tatsuo, Annaka-shi, Gunma 379-01 (JP)
(74) Representative: Bühling, Gerhard, Dipl.-Chem.

(56) References cited:
- EP-A- 0 146 255
- US-A- 4 543 485

## Description

This invention relates to a radiation detector used in high energy physics or diagnostic radiology such as a X-ray computerized tomographic apparatus (X-ray CT) and a positron emission nuclide tomographic apparatus (positron CT).

A radiation detector having a photomultiplier tube and a scintillator generates scintillation light by irradiated radiation and then the photons of the light are detected by the photomultiplier tube. The scintillator thus is required to meet the following conditions:
(1) the scintillator should transmit to the photomultiplier tube the maximum of the fluorescence generated in itself, and
(2) reflecting layers applied to the scintillator should be high in reflectance, stable and exempt from any alteration and discoloration, all over the ultraviolet to visible light range. Several types of scintillators satisfying these requirements have so far been commercialized.

One of examples of such commercial use has been disclosed in Japanese Patent Provisional Publication No. 57-194374. The conventional radiation detector thus disclosed uses, as the reflecting layers of Bi₄Ge₃O₁₂ crystal (referred to as "BGO crystal" ), BaSO₄ with a binder consisting of polyvinyl alcohol (referred to as "PVA binder").

A further prior art device is disclosed in US-A-4 543 485, which relates to a radiation detector comprising a photomultiplier tube, a scintillator crystal, such as a bismuth germanate (BGO) crystal, a face of which contacts the photomultiplier tube, and having a light reflective layer on faces other than the contacting face. The light reflective layer contains a powdery reflective agent dispersed in an organic binder such as ethyl cellulose, or an organic solvent such as terpineol. In order to improve the adhesive strength and the moisture resistance of the light reflective layer, a synthetic resin, such as an epoxy resin, an acrylic resin, or an urethane resin may be used as a protective outer layer of the radiation detector.

The European patent application EP-A-0 146 255 discloses a formable light reflective composition which may be used as a radiation detector comprising a resin containing light-reflective solid particles having sizes of from 0.001 to 20 µm. Different flowable and curable resins comprising also polyacrylates may be used, but silicone type resins are preferred. This composition is used as a light reflective layer for preparing a radiation detector with sodium iodide, caesium fluoride, caesium iodide, barium fluoride and calcium fluoride as scintillation crystal.

When forming conventional reflecting layers of BGO crystal from BaSO₄ with PVA binder, the reflectance of the reflecting layers is likely to fluctuate and the reflecting layers frequently exfoliate off the BGO crystal. These disadvantages are caused by permeation of adhesive material into the reflecting layers while they are made to adhere the BGO crystal to the photomultiplier tube by silicone-based adhesive commonly used. This permeation reduces the reflectance of the layers and adhesion.

There is another disadvantage in the manufacturing process of conventional reflecting layers. The reflecting layers are made into multiple layers from aqueous solutions of different concentration of PVA mingled with BaSO₄ to be repeatedly coated thereon so many time that the process is onerous and expensive.

This invention made to resolve such problematical points is intended to offer a radiation detector which meets the requirements of the scintillator, improves the reflecting properties and adhesiveness of the reflecting layers and can be readily manufactured. This is achieved by providing a radiation detector as defined in Claim 1.

As the results of the present inventors' intense researches and studies made to have satisfactory reflecting layers of radiation detectors, the inventors found that the mean particle size of the reflecting agent has a significant influence upon the reflectance of the layers.

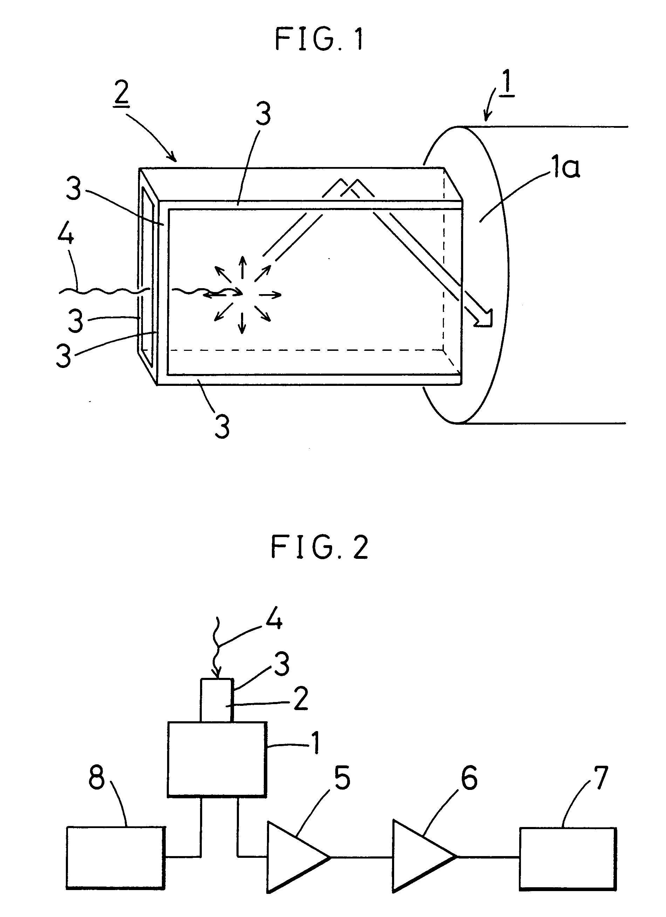

As shown in Fig. 1, the radiation detector of this invention has a photomultiplier tube 1, a Bi₄Ge₃O₁₂ crystal 2 and reflecting layers 3. The reflecting layer 3 contains a reflecting agent and an acrylic resin type binder which are provided on surfaces other than the face of the crystal 2 contacted to the photomultiplier tube 1. The contacting face of the crystal is mirror polished and the other surfaces ore rough polished

The mean particle size of the reflecting agent is preferably not less than 0.8 µ m and that the binder is a polymer type binder.

The thickness of the reflecting layers 3 is preferably 50 µ m or more.

The mean particle sizes of the reflecting agent in the reflecting layers are more than 0.8 µ m so that the reflecting layers enhance the reflectance. This implies a greater number of photons which reach the photomultiplier tube and better energy resolution. If the mean sizes are less than this value, the energy resolution will be increased as described later, which in turn worsens the sensitivity of the radiation detector.

Use of polymer type binder, more specifically an acrylic resin, as a binder to form the reflecting layers allows to avoid influence of the silicone-based adhesive and to improve the reflectance and adhesion of the reflecting layers. The thickness of the layers, which is more than 50 µ m, permits to obtain small enough an energy resolution. If the thickness of the layers is not more than 50 µ m, the scintillation in the BGO crystal leaks through the reflecting layers thereby rendering it impossible to have low enough an energy resolution.

Thus the radiation detector of this invention presents a high enough sensitivity with its energy resolution 16% or less.

The reflecting agents used are known materials such as BaSO₄, TiO₂, Al₂O₃, MgO and the like. Since the energy resolution increases if the mean particle sizes of these reflecting agents are 0.8 µ m or less. 0.8µ m or more of size, more preferably 0.8 to 2.5µ m thus is to be chosen.

Use of acrylic resin based synthetic paints as polymer type binder enables to retain scintillation value of BGO crystal 2 as well as excellent adhesion and hardly allows crack. It does not permit such discoloration of paint film as in case of epoxy resins. Further use of silicone-based binder to adhere the BGO crystal 2 onto the photomultiplier tube 1 can avoid permeation of the binder and such trouble as exfoliation of the reflecting layers 3.

The acrylic resins used are known materials such as polyacrylic acid esters: for instance, polymethylacrylate, polyethylacrylate, polybutylacrylate; emulsions and solvents which are of copolymerization type of these esters with acrylonitrile, vinyl acetate, vinyl chloride and the like.

Because enough reduction of energy resolution cannot be had if the reflecting layers 3 are 50 µ m or less in thickness, this thickness should be not less than 50µ m, more preferably 50 µ m to 200 µ m. Additionally, the reflecting layers 3 may be overlaid with Teflon (Trade name; made by Du Pont Corporation) tape having reflective power. Furthermore, some parts of the reflecting layers 3 may be used Teflon tape as changing from reflecting layers containing reflecting powder agents and acrylic resins.

This invention will be understood more easily by referring to the following working examples not limited with illustrations.

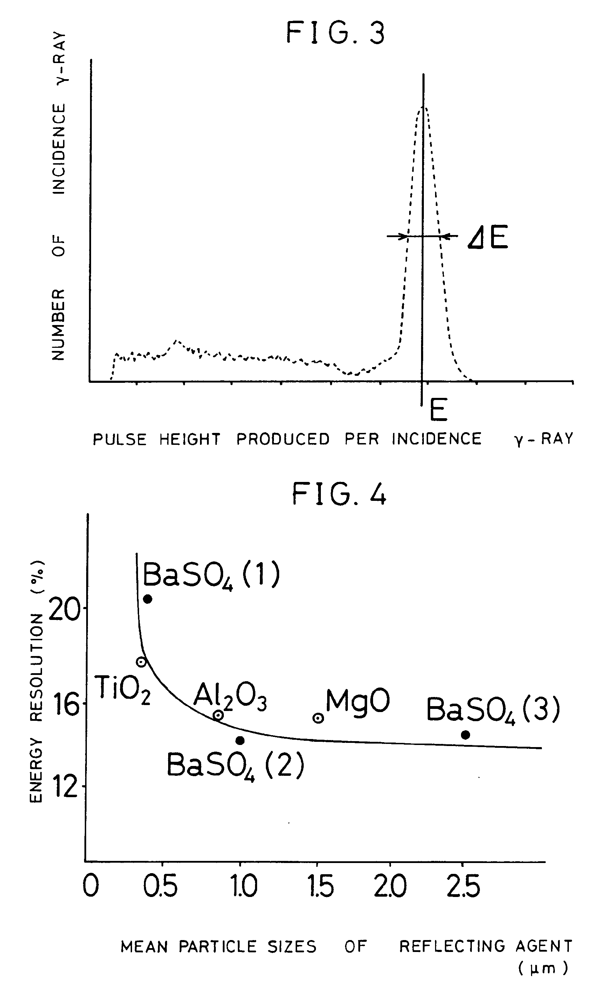

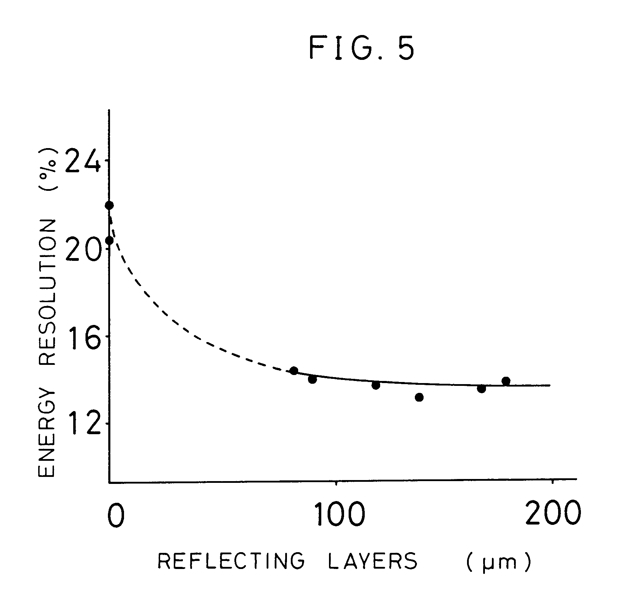

FIG. 1 is a perspective illustration showing a working example of this invention, FIG. 2 is a block diagram showing a system of measurement, FIG. 3 represents a characteristic curve showing a relationship between a number of incidence γ -ray and pulse height generated by the γ -ray, FIG. 4 is a characteristic diagram showing the relationship between mean particle sizes of the reflecting layers and an energy resolution in the working example and FIG. 5 is another characteristic curve showing the relationship between the thickness of the reflecting layers and the energy resolution in the working example.

In the FIG. 1, 1 represents a photomultiplier tube, 2 represents Bi₄Ge₃O₁₂ crystal in rectangular parallelepiped form (referred to as BGO crystal) contacted to the entrance window 1a of the photomultiplier tube 1 and 3 represents reflecting layers of the BGO crystal 2 provided on faces other than a face contacted to the photomultiplier tube 1. The reflecting layers 3 consist of a reflecting agent and a polymer type binder.

One face of 5 x 10 mm of a BGO crystal, which cut 5 x 10 x 25 mm of measure, was mirror polished and other 5 faces were rough polished. Thus the BGO crystal 2 as scintillator was prepared. A paint of reflecting agent was prepared by mixing one volume part of liquid dispersion consisting of 1kg of powdered reflecting agent, 500g of water and 60g of 2.6% PVA aqueous solution and another one volume part of an acrylic type resin (NIPPEI HOME PAINT, a brand of NIPPON PAINT K. K.). This paint was coated on the five rough-polished faces by a means of a spray gun. After drying up the coated paint, the reflecting layers 3 were obtained on the 5 faces of the BGO crystal 2. Use of an acrylic type resin as binder made it possible to have such layers by only once coating.

The mirror polished face of this BGO crystal 2 was contacted to the photomultiplier tube 1 as shown in FIG. 1. A measuring system for an energy resolution of the above scintillator was build up as shown in FIG. 2. The energy resolution of the scintillator was then measured by using the system. The light generated by radiation of γ -ray 4 irradiated onto the BGO crystal 2 was received and transferred to photo-electron by the photomultiplier tube 1. The photo-electron was amplified by the preamplifier 5 and the amplifier 6. Then the number of photons generated was counted up with the counter 7. The number 8 in the figure represents an electric source.

As shown in FIG. 3 pulse height produced per incidence γ -ray was plotted on coordinate with the pulse height by incidence of the γ - ray taken on an abscissa and the number of the incidence γ -ray on the ordinate. The energy resolution can be calculated in terms of the pulse peak E thus obtained and the half value width ΔE of the peak, from the following formula:
Energy resolution = ΔE/E (%)

The lower of the energy resolution, the resolution of the γ -ray detector is considered to be higher.

FIG. 4 shows the results of measurement of this energy resolution using a wide variety of reflecting agents and varying the mean particle size thereof. As is clear from this figure, when the mean size of the agent is 0.8 µ m or larger, the energy resolution indicates a value 16% or less, which implies a good luminous efficiency and that the resolution is well stable.

FIG. 5 indicates the result of measurement of energy resolution, made using BaSO₄, 1 µ m in mean particle size and varying the thickness of the reflecting layers 3. As is seen in this figure, the energy resolution increases if the thickness is less than 50µ m, but it takes a stable value of less than 16% when the thickness is more than 50µ m. It was observed that any of these reflecting layers caused to grow no exfoliation nor crack.

The BGO crystals 2 having the reflecting layers thus obtained were adhered with each other through intermediary of the layers with commonly used silicone-based adhesive "KE420" (brand of THE SHIN-ETSU CHEMICAL) and then assembled into a radiation detector. No exfoliation of the reflecting layers nor increased energy resolution was recognized.

For comparison, other reflecting layers were formed with PVA binder to examine their adhesiveness. These reflecting layers were readily exfoliated between themselves and the BGO crystal as a result of their similar adhesion to the above using a silicone-based binder.

As the explained the above, since the energy resolution of the radiation detector by this invention can be made smaller and stable by taken not less than 0.8 µ m of the mean particle sizes of the reflecting agent that forms the reflecting layers provided on Bi₄Ge₃O₁₂ crystal faces other than a face contacted to the entrance window of the photomultiplier tube, radiation can be detected with high accuracy.

The detection accuracy can be improved since the energy resolution caused to be reduced and stabilized by raising the thickness of reflecting layers up to 50 µ m or more. Furthermore use, as a binder for forming the reflecting layers, of high polymer binder, more specifically acrylic resins, is effective in eliminating the influence of the silicone-based adhesive agent, which allows to enhance the reflectance and adhesion of the reflecting layers. At the same time, a processing once suffices to build the reflecting layers thus resolving the problem of intricate manufacturing.

By a radiation detector comprising a photomultiplier tube, a Bi₄Ge₃O₁₂ crystal of which a face contacted to the photomultiplier tube and reflecting layers which essentially consisting of reflecting powdery agent and an acrylic resin type binder provided on faces other than the face of the crystal, the energy resolution can be made smaller and stable. Thus, the resolution of the detector can be made higher.

The detection accuracy can be improved since the energy resolution caused to be reduced and stabilized by raising the thickness of reflecting layers up to 50 µ m or more. Furthermore use of an acrylic resin, as a binder for forming the reflecting layers, is effective in eliminating the influence of the silicone-based adhesive agent, which allows to enhance the reflectance and adhesion of the reflecting layers. At the same time, a processing once suffices to build the reflecting layers thus resolving the problem of intricate manufacturing.

## Claims

1. A radiation detector comprising a photomultiplier tube (1), a multiface Bi₄Ge₃O₁₂ crystal (2), a face of which contacts the photomultiplier tube, and reflecting layers (3) containing a reflecting powdery agent and a binder on faces other than the contacting face, **characterized in that** said contacting face is mirror polished and said other surfaces are rough polished, and said binder contains an acrylic resin.

2. The radiation detector according to claim 1, wherein the reflecting powdery agent has the mean particle sizes of 0.8 µm to 2.5 µm.

3. The radiation detector according to claim 1, wherein the reflecting powdery agent is at least one selected from the group consisting of BaSO₄, TiO₂, Al₂O₃ and MgO.

4. The radiation detector according to claim 1, wherein the acrylic resin is at least one selected from the group consisting of polymethylacrylate, polyethylacrylate, polybutylacrylate and copolymer of acrylonitrile, vinyl acetate and vinyl chloride with said acrylates.

5. The radiation detector according to claim 1, wherein thickness of the reflecting layers (3) is not less than 50 µm.

## Patentansprüche

1. Strahlungsdetektor, umfassend eine Photoverstärkerröhre (1), einen vielflächigen Bi₄Ge₃O₁₂-Kristall (2), von dem eine Fläche mit der Photoverstärkerröhre in Kontakt ist und Reflexionsschichten (3), enthaltend ein pulverförmiges Reflexionsmittel und ein Bindemittel auf Flächen, die sich von der Kontaktfläche unterscheiden, **dadurch gekennzeichnet,** daß die Kontaktfläche spiegelpoliert ist und die anderen Oberflächen grobpoliert sind und das Bindemittel ein Acrylharz enthält.

2. Strahlungsdetektor nach Anspruch 1, **dadurch gekennzeichnet,** daß das pulverförmige Reflexionsmittel eine mittlere Teilchengröße von 0,8 bis 2,5 µm besitzt.

3. Strahlungsdetektor nach Anspruch 1, **dadurch gekennzeichnet,** daß das pulverförmige Reflexionsmittel mindestens eines ist, ausgewählt aus BaSO₄, TiO₂, Al₂O₃ und MgO.

4. Strahlungsdetektor nach Anspruch 1, **dadurch gekennzeichnet,** daß das Acrylharz mindestens eines ist, ausgewählt aus Polymethylacrylat, Polyethylacrylat, Polybutylacrylat und Copolymeren von Acrylnitril, Vinylacetat und Vinylchlorid mit diesen Acrylaten.

5. Strahlungsdetektor nach Anspruch 1, **dadurch gekennzeichnet,** daß die Dicke der Reflexionsschichten (3) nicht geringer als 50 µm ist.

## Revendications

1. Détecteur de rayonnements comprenant un tube photomultiplicateur (1), un cristal de Bi₄Ge₃O₁₂ à plusieurs faces (2), l'une de celles-ci étant en contact avec le tube photomultiplicateur, et des couches réfléchissantes (3) contenant un agent réfléchissant en poudre et un liant sur les faces autres que celle en contact, caractérisé en ce que ladite face en contact présente un poli spéculaire, en ce que lesdites autres surfaces présentent un poli grossier, et en ce que ledit liant contient une résine acrylique.

2. Détecteur de rayonnements selon la revendication 1, dans lequel l'agent réfléchissant en poudre a une grosseur de particule moyenne de 0,8 µm à 2,5 µm.

3. Détecteur de rayonnements selon la revendication 1, dans lequel l'agent réfléchissant en poudre est au moins un agent choisi dans le groupe composé de BaSO₄, TiO₂, Al₂O₃ et MgO.

4. Détecteur de rayonnements selon la revendication 1, dans lequel la résine acrylique est au moins une résine choisie dans le groupe composé de polyméthylacrylate, polyéthylacrylate, polybutylacrylate et copolymère d'acrylnitrile, d'acétate de vinyle et de chlorure de vinyle avec lesdits acrylates.

5. Détecteur de rayonnements selon la revendication 1, dans lequel l'épaisseur des couches réfléchissantes (3) n'est pas inférieure à 50 µm.
